# EUROPÄISCHE PATENTANMELDUNG

(11) **EP 2 002 999 A1**
(43) Veröffentlichungstag der Anmeldung: **17.12.2008**
(21) Anmeldenummer: 08010788.1
(22) Anmeldetag: 13.06.2008
(51) Int. Cl.: B60D 5/00, B61D 17/22, B62D 47/02

(54) **Als Zugfahrzeug ausgebildeter Bus mit einem Personentransportanhänger**

(30) Priorität: 14.06.2007 EP 07011654
(71) Anmelder: Hübner GmbH, 34123 Kassel (DE)
(72) Erfinder: Karasek, Jens, 34260 Kaufungen (DE); Schulz, Ralf, 34317 Habichtswald (DE)
(74) Vertreter: Walther, Robert

(57) **Zusammenfassung**

Gegenstand der Erfindung ist ein als Zugfahrzeug ausgebildeter Bus (1) mit einem Personentransportanhänger, wobei der Anhänger (2) durch ein Gelenk (12) mit dem Zugfahrzeug in Verbindung steht, wobei das Gelenk (12) durch eine Kupplungseinrichtung (60) mit dem Zugfahrzeug (1) lösbar verbindbar ist, wobei das Zugfahrzeug (1) mit dem Anhänger (2) verbindend ein Übergang, umfassend einen Balg (11) und eine Übergangsplattform (50) ist, wobei sowohl der Balg (11) als auch die Plattform (50) lösbar an dem Zugfahrzeug (1) angeordnet sind, wobei der Anhänger (2) eine Tandemachse (2a) aufweist.

## Beschreibung

Die vorliegende Erfindung betrifft einen als Zugfahrzeug ausgebildeten Bus mit einem Personentransportanhänger.

Busse mit Anhänger sind seit Langem bekannt. In der Vergangenheit wurden an die als Zugfahrzeuge ausgebildeten Busse zweiachsige Anhänger mittels einer Deichsel angehängt. Zwischen Zugfahrzeug und Hänger befand sich bis auf die Deichsel keinerlei Verbindung, insbesondere keine Verbindung, die es erlaubte, Personen den Übertritt vom Anhänger zum Zugfahrzeug zu ermöglichen. Solche Fahrzeuge sind im Laufe der Zeit nicht mehr nachgefragt worden, da derartige Busse ohne Schaffner auskommen mussten, und insofern für den Fahrer keine Möglichkeit bestand, auf das Geschehen im Anhänger Einfluss zu nehmen. Vorteilhaft an solchen Fahrzeugen ist allerdings immer gewesen, dass diese durch An- oder Abkuppeln des Hängers eine relativ hohe Flexibilität in Bezug auf das gerade anstehende Fahrgastaufkommen aufwiesen.

Darüber hinaus sind sogenannte Gelenkbusse bekannt. Derartige Gelenkbusse bestehen aus einem Vorderwagen und aus einem Hinterwagen, die ebenfalls durch ein Gelenk miteinander verbunden sind. Das Gelenk ist umgeben durch einen Übergang, umfassend einen Balg in Form eines Wellen- oder Faltenbalges, sowie eine Übergangsbrücke, meistens in der Form einer als Drehscheibe ausgebildeten Plattform. Der Hänger oder das nachlaufende Fahrzeugteil besitzt hierbei lediglich eine Achse, die bei einem sogenannten Pusher durch den hinten sitzenden Motor angetrieben ist. Daneben gibt es auch sogenannte Puller, bei denen die letzte Achse des Zugfahrzeugs angetrieben ist. Grundsätzlich gilt, dass mit derartigen Gelenkbussen eine Anpassung an das jeweilige Personenaufkommen nicht möglich ist, da diese Fahrzeuge nicht entkuppelbar sind. Gerade in Bezug auf steigende Treibstoffpreise ist man allerdings bemüht, hier Abhilfe zu schaffen.

Aus der EP 1531117 ist insofern ein Gelenkbus bekannt, der ebenfalls über zwei Fahrzeugteile verfügt, die durch eine Gelenkverbindung miteinander verbunden sind, und zwischen denen ein Übergang vorgesehen ist, um ein Überwechseln von Personen von dem einen Fahrzeugteil in das andere Fahrzeugteil zu ermöglichen, wobei das nachlaufende Fahrzeugteil, also der Hänger, zwei Achsen aufweist. Wesentlich bei dieser Ausgestaltung eines Gelenkbusses ist, dass hier durch einen Kupplungsmechanismus das nachlaufende Fahrzeugteil, also der Anhänger, von dem Zugfahrzeug getrennt werden kann. Problematisch an einer solchen Ausgestaltung ist, dass bei einem zweiachsigen Anhänger, also bei einem Anhänger, der zu beiden Enden jeweils eine Achse aufweist, eine extrem aufwändige Bodenkonstruktion für den Übergang erforderlich ist, um die Möglichkeit des Hinüberwechselns von Personen von dem einen Fahrzeugteil in das andere Fahrzeugteil zu ermöglichen. Dies liegt allein darin begründet, dass der Hänger zwei voneinander beanstandete Achsen aufweist. Ein solcher Hänger kann zwar problemlos an- und abgekuppelt werden, da er selbstständig stehend ausgebildet ist, jedoch ist zumindest vorzusehen, dass die Anbindung des Gelenks am jeweiligen Fahrzeugteil durch eine Lagerung erfolgt, die sowohl Nick- als auch Wankbewegungen erlaubt. Die Konstruktion des Bodens wird insofern besonders aufwändig, als bei Auftreten von überlagerten Nick-, Wank- und Knickbewegungen der Boden extremen Beanspruchungen unterworfen würde. Das heißt, ein solches Fahrzeug gemäß der EP 1531117 ist zwar prinzipiell herstellbar, allerdings nur mit erheblichem technischen Aufwand, insbesondere im Hinblick auf die Ausgestaltung des Übergangsbodens.

Andererseits besteht aufgrund der hohen Treibstoffpreise nach wie vor ein lebhaftes Interesse daran, einen Bus der eingangs genannten Art derart auszubilden, dass ein solcher Bus problemlos an das jeweils vorhandene Fahrgastaufkommen angepasst werden kann. Das heißt, das Abkuppeln des Nachläufers ist von immanenter Wichtigkeit, um eine solche Anpassung an das jeweils vorhandene Fahrgastaufkommen vornehmen zu können.

Die der Erfindung zugrunde liegende Aufgabe besteht demzufolge darin, bei einem als Zugfahrzeug ausgebildeten Bus mit Personentransportanhänger eine Ausgestaltung vorzunehmen, die ein einfaches An- und Abkuppeln, und zwar auch des Übergangs, also insbesondere des Balges, ermöglicht, und darüber hinaus in Bezug auf die Achslast die vorgesehenen Grenzwerte einhält, ohne dass eine technisch aufwändige Konstruktion des Übergangsbodens oder der Plattform erforderlich ist.

Insofern ist erfindungsgemäß ein als Zugfahrzeug ausgebildeter Bus mit einem Personentransportanhänger vorgesehen, wobei der Hänger durch ein Gelenk mit dem Zugfahrzeug in Verbindung steht, wobei das Gelenk durch eine Kupplungseinrichtung mit dem Zugfahrzeug lösbar verbindbar ist, wobei das Zugfahrzeug mit dem Anhänger verbindend einen Übergang umfassend einen Balg und eine Übergangsplattform aufweist, wobei sowohl der Balg als auch die Plattform lösbar an dem Zugfahrzeug angeordnet sind, wobei der Anhänger eine Tandemachse aufweist.

Wesentlich bei der Ausgestaltung des erfindungsgemäßen Busses mit lösbar mit dem Zugfahrzeug verbundenem Hänger ist, dass dieser problemlos an das jeweilige Fahrgastaufkommen angepasst werden kann. Dies gilt insbesondere im Hinblick darauf, dass das Zugfahrzeug in der Höhe des Balges vom Hänger getrennt werden kann. Das heißt, dass dann, wenn das Zugfahrzeug alleine fährt, die Möglichkeit besteht, den Hänger abzustellen und durch gegebenenfalls eine oder zwei Stützen am jeweiligen Ende des Hängers den Hänger in der vorgegebenen Position zu halten, was eine automatische Kupplung des Busses mit dem Hänger ermöglicht. Ein sogenannter Tandemachser hat darüber hinaus den Vorteil, dass die Achslasten auf zwei Achsen verteilt werden, obgleich mechanisch ein solcher Tandemachser als Einachser zu behandeln ist. Das heißt, die mechanischen Probleme in Bezug auf die Übergangsbrücke oder Übergangsplattform, die in Bezug auf einen zweiachsigen Anhänger bestehen, stellen sich bei der Verwendung eines Tandemachsers in der Form nicht mehr.

Vorteilhafte Merkmale zu der Erfindung ergeben sich aus den Unteransprüchen.

So ist insbesondere vorgesehen, dass die hintere Achse des Tandemachsers lenkbar ausgebildet ist. Denkbar ist hierbei insbesondere eine elektrische Lenkung, und zwar dadurch, dass an der Spurstange ein Elektromotor mit einem Ritzel angreift, der entsprechend dem Lenkeinschlag der vorderen Achse einen entsprechenden Lenkeinschlag der hinteren Achse des Tandemachsers vornimmt.

Nach einem weiteren vorteilhaften Merkmal der Erfindung ist vorgesehen, dass die Knickachse des Drehgelenks beabstandet ist von der Nick- und Wankachse des mindestens einen Lagerelements, das am Wagenkasten befestigt ist. Hierdurch wird erreicht, dass eine relativ einfache Anbindung an das Zugfahrzeug vorgenommen werden kann, wie es genau der Fall ist, wenn der Hänger lediglich eine Achse aufweisen würde. Insbesondere würde nicht mehr die Notwendigkeit bestehen, zwei Lagerstellen zur Aufnahme und Übertragung der Nick- und Wankmomente vorzusehen, oder eine Nick- und Wankachse im Bereich der Knickachse vorzusehen, was einerseits ein solches Gelenk extrem aufwändig und teuer machen würde, und darüber hinaus zu einer erhöhten mechanischen Beanspruchung des Übergangsbodens führen würde.

Nach einem besonderen Merkmal der Erfindung ist vorgesehen, dass zur Übertragung der Nick- und Wankbewegungen Metallgummilager als Lagerelemente vorgesehen sind, wobei diese Metallgummilager im Bereich des einen oder des anderen Wagenkastens angeordnet sein können. Insbesondere ist vorgesehen, dass dann, wenn für die Kupplung des Nachläufers am Vorderwagen Kupplungselemente vorgesehen sind, die Metallgummilager vorteilhaft auch am gleichen Ende des Gelenks, also am Vorderwagen angeordnet sind.

Hierbei erfolgt vorteilhaft die Anordnung der Metallgummilager noch am Gelenk, wobei die Kupplungseinrichtung im Übergang zum Wagenkasten des Vorderwagens vorgesehen ist.

Wesentliche Voraussetzung für die Kupplung zweier Fahrzeugteile ist, dass auch der Balg des Übergangs ein leichtes An- und Abkuppeln ermöglicht. Denn nur dadurch wird gewährleistet, dass tatsächlich durch An- und Ankuppeln des Hängers vor Ort eine Anpassung an das jeweilige Fahrgastaufkommen erfolgt.

Hierzu ist vorgesehen, dass bei zwei miteinander gekuppelten Fahrzeugen mit einem Übergang und mindestens einem Balg sowie einer Kupplungsvorrichtung mit zwei Kuppelelementen zur Verbindung des Balges mit dem Fahrzeug, die Kuppelelemente miteinander in Eingriff bringbare männliche und weibliche Kupplungsglieder aufweisen, wobei zur Verriegelung der männlichen Kupplungsglieder mit den weiblichen Kupplungsgliedern jeweils ein Riegelglied vorgesehen ist, wobei das Riegelglied durch das jeweilige Kuppelelement verschieblich geführt ist, wobei das Riegelglied mit einem Kraftübertragungsglied in Verbindung steht, das durch das Kuppelelement verschieblich geführt ist, wobei das Kraftübertragungsglied sowohl Zug- als auch Schubkräfte überträgt. Das Kuppelelement kann hierbei ein Kuppelrahmen sein, so dass bei zwei Balghälften die Verbindung durch die Kupplung zweier Kuppelrahmen erfolgt. Hieraus wird deutlich, dass die Kupplung der beiden Fahrzeugteile durch zwei Kuppelrahmen erfolgt, wobei sowohl am Balg als auch am stirnseitigen Ende des Wagenkastens Kuppelrahmen vorgesehen sind, die Kupplungsglieder aufweisen, die durch Riegelglieder lösbar verbindbar sind. Wesentlich zum schnellen Kuppeln bzw. Entkuppeln ist, dass lediglich ein oder zwei Riegelglieder betätigt werden müssen, was denkbar geringen Aufwand darstellt.

Nach einer Variante kann das Kuppelelement allerdings auch die Stirnwand des Wagenkastens oder Fahrzeugs sein. Das heißt, dass die männlichen und/oder weiblichen Kupplungsglieder unmittelbar an der Stirnwand des Fahrzeugs angeordnet sind.

Hieraus wird deutlich, dass die gewählte Konstruktion - abgesehen von den beiden Kuppelrahmen - im Wesentlichen nur noch vier unterschiedliche Bauteile umfasst, nämlich männliche und weibliche Kupplungsglieder, ein Riegelglied sowie ein Kraftübertragungsglied. Dies rührt daher, dass die männlichen und weiblichen Kupplungsglieder, die miteinander in Eingriff bringbar und durch das Riegelglied auch miteinander zu verriegeln sind, zwei Aufgaben übernehmen. Zum einen ist dies die Aufgabe der Zentrierung, und zwar insofern, als diese beiden Glieder ineinander einlaufen, bevor sie miteinander verriegelt werden und zum anderen übernehmen sie auch die eigentliche Aufgabe der Verrieglung. Das heißt, dass durch die formschlüssige Verbindung der männlichen Kupplungsglieder mit den weiblichen Kupplungsgliedern sowohl Kräfte parallel zur Längsachse des Fahrzeugs übertragen werden können als auch Kräfte in Querrichtung zur Fahrzeuglängsachse, d. h. durch die männlichen und weiblichen Kupplungsglieder wird in der Verriegelungsstellung eine Bewegung der beiden derart verbundenen Kuppelrahmen relativ miteinander verhindert.

Im Einzelnen ist vorgesehen, dass das Kuppelelement z. B. in Form eines Kuppelrahmens eine Nut zur Aufnahme des Kraftübertragungsgliedes und des Riegelgliedes aufweist, wobei das weibliche Kupplungsglied im Bereich der Nut derart angeordnet ist, dass das Riegelglied zur Verriegelung des männlichen Kupplungsgliedes in dem weiblichen Kupplungsglied in das weibliche Kuppelglied einführbar ist. Hieraus wird deutlich, dass im verriegelten Zustand der beiden Kupplungsglieder das Riegelglied eine formschlüssige Verbindung zwischen den beiden Kupplungsgliedern in sämtliche drei Raumrichtungen bewirkt.

Nach einem besonderen Merkmal der Erfindung ist vorgesehen, dass das Kraftübertragungsglied in Richtung seiner Längsachse frei beweglich in der Nut des Kuppelelements oder Kuppelrahmens angeordnet ist. Frei beweglich bedeutet in diesem Zusammenhang, dass das Kraftübertragungsglied lediglich in der Nut einliegt, an seinen Enden jedoch frei beweglich ist, also nicht an einem Ende in irgendeiner Weise in der Nut fixiert ist. Das bedeutet, dass aufwendige Bowdenzug-Konstruktionen, wie sie nach dem Stand der Technik zum Teil erforderlich sind, hier nicht notwendig werden. Dies liegt im Wesentlichen darin begründet, dass das Kraftübertragungsglied starr, aber dennoch hoch biegsam ausgebildet ist, also beispielsweise aus Federstahl besteht oder aber auch aus glasfaserverstärktem Kunststoff hergestellt ist und insofern als biegsame Stange in der Lage ist, sowohl Zug- als auch Druckkräfte zu übertragen. Insbesondere ist in diesem Zusammenhang vorgesehen, dass zwei Kraftübertragungsglieder jeweils in Richtung ihrer Längsachse frei beweglich in der umlaufenden Nut des Kupplungsrahmens angeordnet sind. Das heißt, dass das Kraftübertragungsglied nicht notwendigerweise z. B. in einem in etwa rechteckförmigen Kuppelrahmen rundum geführt ist, sondern dass vielmehr beispielsweise diagonal einander gegenüberliegend zwei derartige Kraftübertragungsglieder in der Nut des Kuppelrahmens einliegend vorgesehen sind, die für die Bewegung der Riegelglieder sorgen. Dies hat den Vorteil, dass ein jedes Kraftübertragungsglied nur um eine Ecke z. B. des Kuppelrahmens geführt werden muss und nicht um deren vier, wie dies der Fall wäre, wenn das Kraftübertragungsglied über den gesamten Umfang des Kuppelrahmens geführt werden würde. Hierdurch kann die Reibung im Bereich der Nut, insbesondere im Eckbereich, stark vermindert werden, so dass die Betätigung zum Ent- oder Verriegeln wesentlich erleichtert wird.

Das Riegelglied, das die Verriegelung des männlichen und des weiblichen Kupplungsgliedes vornimmt, ist durch eine Klemmverbindung mit dem Kraftübertragungsglied, z. B. einem Stab aus Federstahl oder aus glasfaserverstärktem Kunststoff, verbunden. Das Riegelglied kann hierbei aus zwei scheibenförmigen Platten bestehen, die auf ihren einander zuweisenden Flächen eine Nut aufweisen, die zur Aufnahme des Kraftübertragungsgliedes dient. Durch die Verbindung der beiden Platten wird nun eine reibschlüssige Verbindung zu dem Kraftübertragungsglied hergestellt.

Bereits an anderer Stelle wurde erläutert, dass das männliche und das weibliche Kupplungsglied bei Kupplung beispielsweise zweier Kuppelrahmen auch die Aufgabe der Zentrierung übernehmen. In diesem Zusammenhang ist insbesondere vorgesehen, dass das weibliche Kupplungsglied eine Einlaufschräge für das männliche Kupplungsglied aufweist. Vorteilhaft besitzt allerdings auch das männliche Kupplungsglied, das einen Riegelbolzen zur Aufnahme durch das weibliche Kupplungsglied aufweist, im Bereich des freien Endes des Riegelbolzens eine Spitze. Der Riegelbolzen selbst weist darüber hinaus ebenfalls eine Öffnung zur Aufnahme des Riegelgliedes auf.

Zur Betätigung des Kraftübertragungsgliedes ist ein am Kuppelrahmen oder Kuppelelement angeordneter Hebel vorgesehen, der mit dem Kraftübertragungsglied in Verbindung steht.

Anhand der Zeichnungen wird die Erfindung nachstehend beispielhaft näher erläutert.
- Figur 1: zeigt einen Gelenkbus mit einem Anhänger mit Tandemachse in schematischer Darstellung;

- Figur 2: zeigt das Gelenk zwischen den beiden Fahrzeugteilen ebenfalls schematisch, wobei die Wagenkästen 1 und 2, als Zugfahrzeug und Nachläufer, lediglich angedeutet sind;
- Figur 2a: zeigt eine Ansicht von oben lediglich auf die Kupplung;
- Figur 2b: zeigt die Kupplung gemäß Figur 2a im entkuppelten Zustand;
- Figur 2c: zeigt schematisch ein Gummi-Metalllager;
- aus Figur 3: ergibt sich das Prinzip einer lenkbaren Achse in schematischer Darstellung;
- Figur 4: zeigt schematisch eine Verbindung zwischen Balg und Fahrzeugteil durch zwei Kuppelrahmen in einer Seitenansicht;
- Figur 5: zeigt eine Frontansicht auf einen Kuppelrahmen;
- Figur 6a: zeigt das männliche Kupplungsglied in einer Seitenansicht;
- Figur 6b: zeigt eine Ansicht von oben auf das männliche Kupplungsglied;
- Figur 7a: zeigt das weibliche Kupplungsglied in einer Seitenansicht;
- Figur 7b: zeigt eine Ansicht von oben auf das weibliche Kupplungsglied;
- Figur 7c: zeigt das weibliche Kupplungsglied in einer weiteren Ansicht;
- Figur 8a: zeigt das Riegelglied in einer Seitenansicht;
- Figur 8b: zeigt eine weitere Ansicht des Riegelgliedes gemäß Figur 8a;
- Figur 9a: zeigt eine Stellung, bei der sich das männliche Kupplungsglied im weiblichen Kupplungsglied befindet;
- Figur 9b: zeigt eine Ansicht gemäß Figur 9a, wobei jedoch das Riegelglied das weibliche und das männliche Kupplungsglied miteinander verriegelt;
- Figur 9c: zeigt einen Schnitt gemäß der Linie IX - IX aus Figur 9b;
- Figur 10: zeigt die Einzelheit X aus Figur 5 in vergrößerter Darstellung.

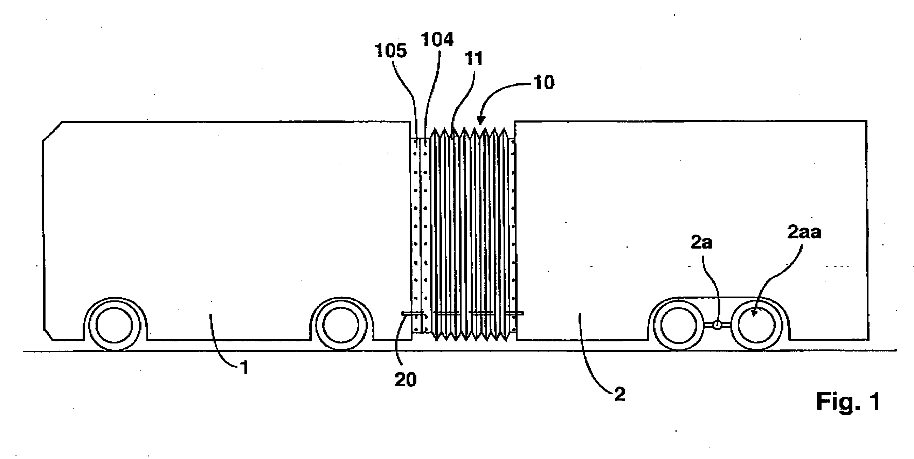

Figur 1 zeigt ein Zugfahrzeug 1 mit einem Nachläufer 2, wobei Zugfahrzeug und Nachläufer durch einen Übergang 10 mit einem Balg 11 verbunden sind, wobei der Balg 11 ein Gelenk 20 überspannt.

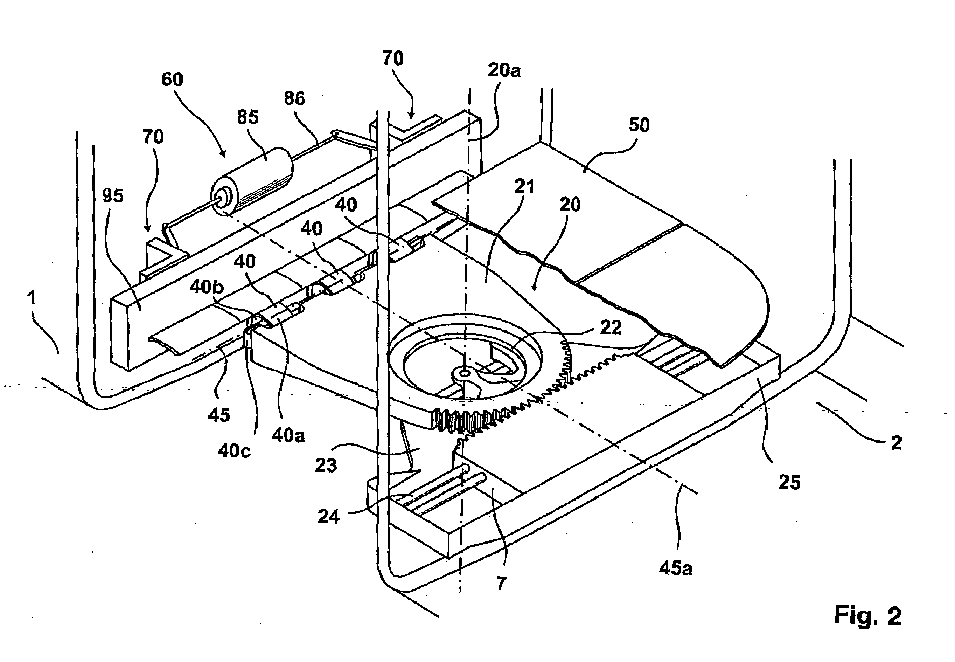

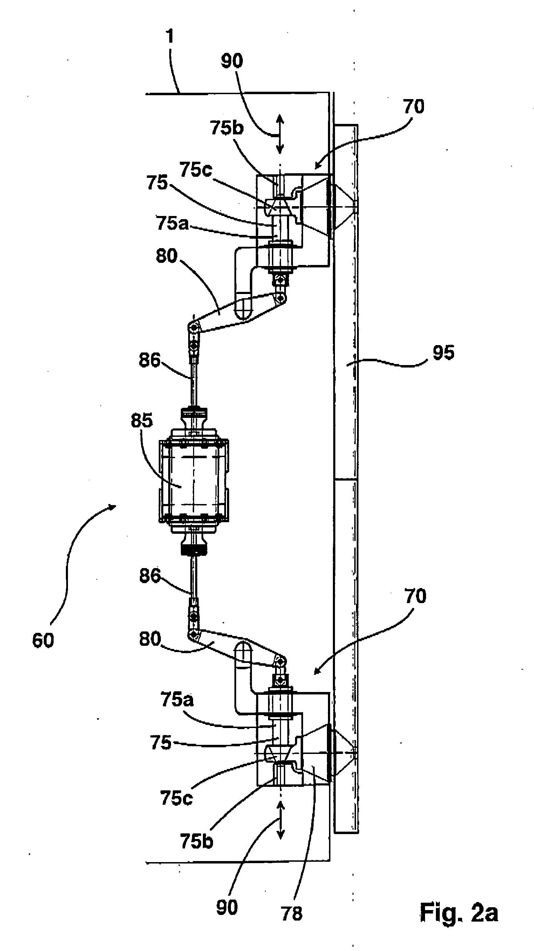

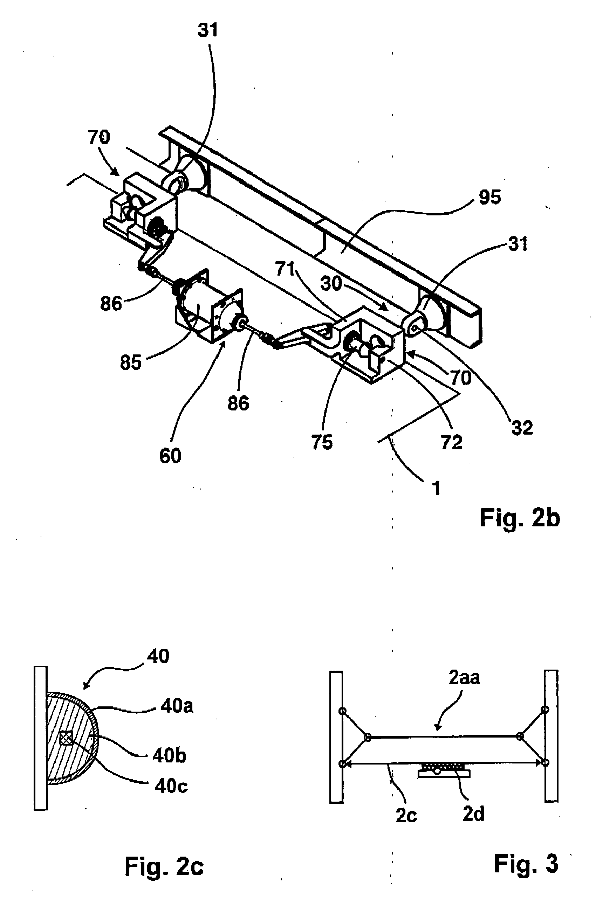

Die Ausbildung des Gelenkes ergibt sich aus Figur 2, wobei die beiden Wagenkästen des Zugfahrzeugs 1 und des Nachläufers 2 lediglich schematisch angedeutet sind. Zwischen Zugfahrzeug 1 und Nachläufer 2 befindet sich das insgesamt mit 20 bezeichnete Drehkranzgelenk mit der Knickachse 20a, dessen Drehring 21 mit dem Zugfahrzeug verbunden ist, und der mit dem inneren Drehring 22 auf einem Drehteller 23 lagert, der an dem Hinterwagen 2 angelenkt ist. Der Drehteller 23, der an dem Hinterwagen 2 angebracht ist, weist die mit 24 bezeichnete Dämpfung 7 auf. Über dem Gelenk befindet sich die Plattform 50. Die Plattform 50 lagert auf dem Drehkranzgelenk 20; sie ist mit dem Zugfahrzeug nicht verbunden. Am Zugfahrzeug befindet sich im Bodenbereich lediglich eine oder mehrere Trittplatten zur Überdeckung des Spaltes zwischen Plattform und Fahrzeugboden.

Vorgesehen ist nun, dass der Drehteller oder Drehschemel 23 eine Rückenplatte 25 besitzt, mit der die Verbindung zum Hinterwagen oder Nachläufer 2 erfolgt.

Am Vorderwagen 1 befestigt sind die Aufnahmeelemente 70 als Teil der beiden Kupplungen der Kuppeleinrichtung 60, wobei die Aufnahmeelemente 70 Schenkel 71, 72 aufweisen (Fig. 2a, Fig. 2b). Übergangsseitig ist eine Traverse 95 vorgesehen, an der zwei Kuppelglieder 31 als Teil der beiden Kupplungen angeordnet sind, wobei die Kuppelglieder 31 endseitig jeweils ein horizontal verlaufendes Auges 32 besitzen. Die beiden Schenkel 71 und 72 dienen der Aufnahme des insgesamt mit 75 bezeichneten Bolzens. Der Bolzen 75 weist zwei zylindrische Abschnitte 75a und 75b auf, wobei zwischen den beiden Abschnitten 75a und 75b ein Konus 75c angeordnet ist, der in das ebenfalls konisch ausgebildete Auge 32 einläuft, und aufgrund des konischen Sitzes im Wesentlichen eine spielfreie Verbindung zwischen den Kuppelgliedern bewerkstelligt. Der Bolzen 75 selbst wird bei Einsetzen des Konus in dem Auge 32 durch die beiden Schenkel 71 und 72 gehalten, so dass ein Verbiegen des Bolzens bei Belastung nicht möglich ist. Um beim Ankuppeln des Hängers an das Zugfahrzeug das Einlaufen des an der Traverse 95 angeordneten Kuppelgliedes in das Aufnahmeelement zu erleichtern, besitzt das Aufnahmeelement einen sich in Richtung auf die Traverse 95 öffnenden konischen Trichter 78. Zum Ein- bzw. Ausrücken des Bolzens 75 ist ein an dem Aufnahmeelement 70 angeordneter Schwenkhebel vorgesehen, der einerseits - wie bereits ausgeführt - mit dem Bolzen 75 und andererseits mit dem Kolbenzylinder-antrieb 85 durch das Gestänge 80, 86 in Verbindung steht, um bei Verschwenkung des Hebels den Bolzen 75 entlang des Pfeils 90 zu bewegen.

Es befinden sich drei zur Übertragung von Wank- und Nickbewegungen um die Nickachse 45 und die Wankachse 45a ausgebildete Metallgummilager 40 nebeneinander am Drehring 21, Solche Metallgummilager sind aus dem Stand der Technik hinreichend bekannt; sie umfassen jeweils eine Hülse 40a, in der ein Gummiring 40b gelagert ist, der wiederum einen Bolzen 40c lediglich gegenüber dem Gummiring verdrehbar aufnimmt. Wankkräfte sind demzufolge ebenfalls nur im Bereich der Elastizität des Gummirings aufnehmbar bzw. zu übertragen. Am anderen Ende sind die Metallgummilager mit der Traverse 95 verbunden (Fig. 2; Fig. 2a).

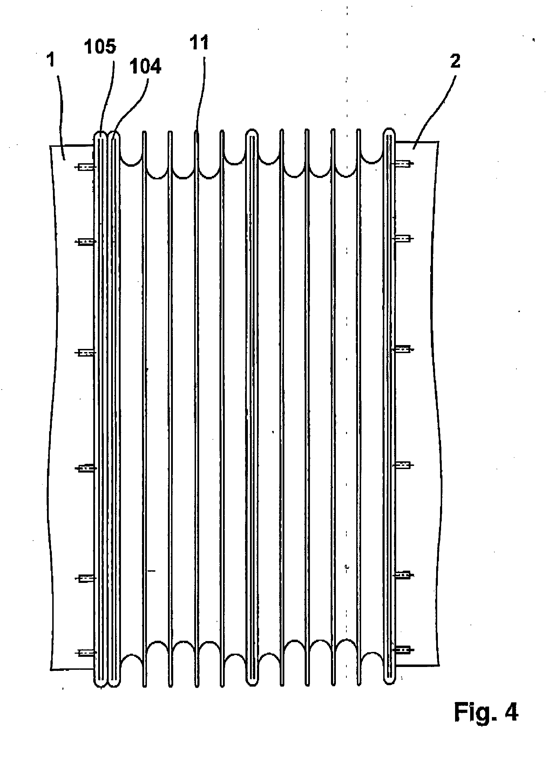

Die Ausbildung der Kuppelrahmen am Balg und am Fahrzeug oder der unmittelbar am Fahrzeug angebrachten Kuppelelemente ergibt sich im Folgenden aus den Figuren 4 bis 10.

Gemäß Figur 4 sind die beiden Fahrzeugteile mit 1 und 2 bezeichnet, wobei zwischen den beiden Fahrzeugteilen der Balg 11 angeordnet ist. Der Balg 11 weist an seinem dem Vorderwagen 1 zugeordneten, stirnseitigen Ende einen Kuppelrahmen 104 auf, der mit dem Kuppelrahmen 105 an der Stirnseite des Wagenkastens 1 kuppelbar ist (siehe auch Fig. 1).

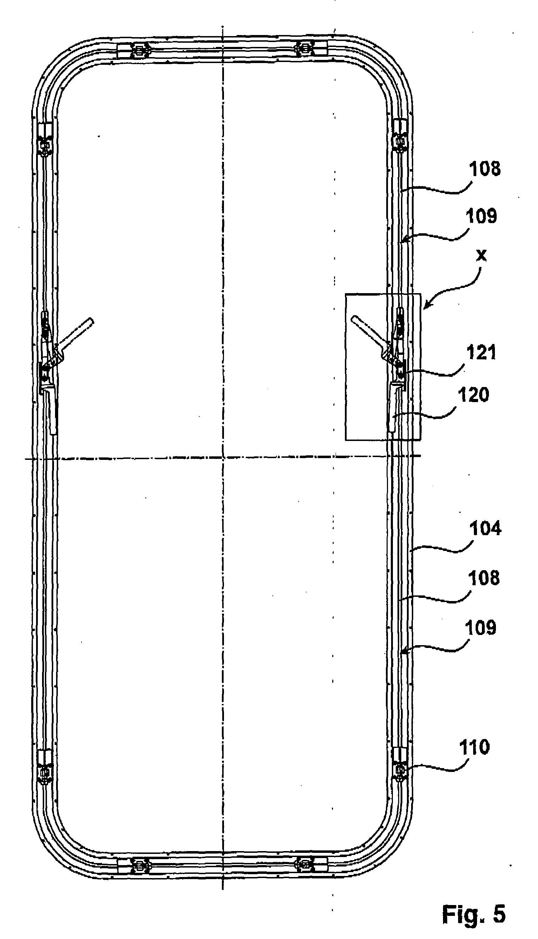

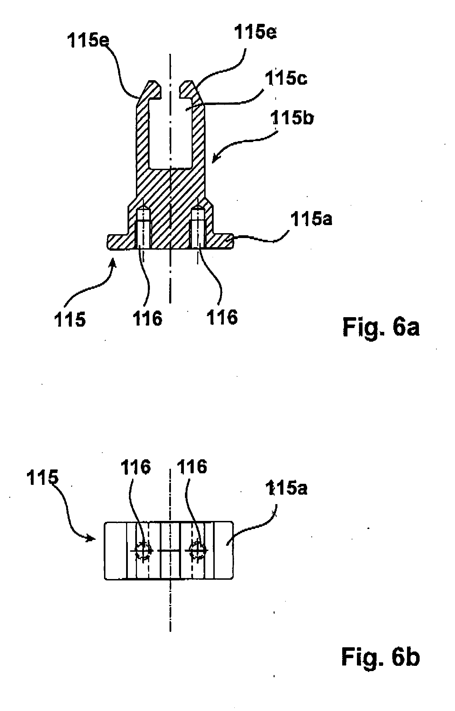

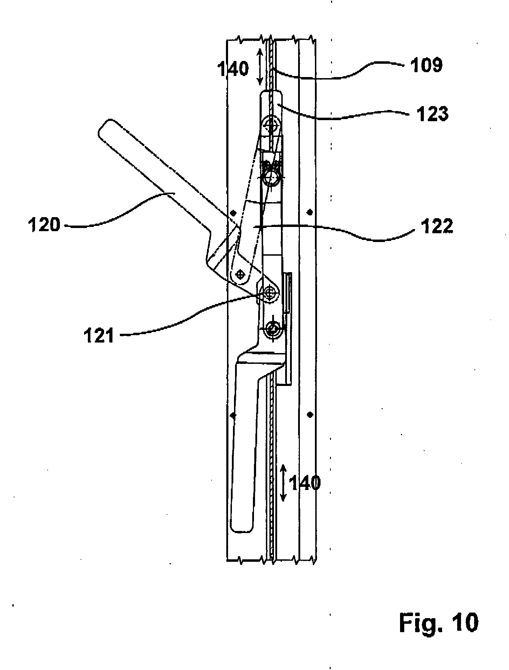

Die Ausbildung des Kuppelrahmens ergibt sich nun aus den Figuren 5 ff. Im vorliegenden Fall weist der in Figur 5 dargestellte Kuppelrahmen lediglich weibliche Kupplungsglieder 110 auf, aber keine männlichen Kupplungsglieder 115. Es besteht die Möglichkeit, sowohl männliche als auch weibliche Kupplungsglieder kombiniert an einem Kuppelrahmen anzuordnen oder eben - wie sich dies aus Figur 5 ergibt - lediglich eine Sorte von Kupplungsgliedern an einem Kuppelrahmen anzuordnen. Die in dem Kuppelrahmen 104 angeordneten weiblichen Kupplungsglieder besitzen - wie bereits ausgeführt - das Bezugszeichen 110. Die korrespondierenden hierzu vorgesehenen männlichen Kupplungsglieder 115 sind in den Figuren 6a und 6b dargestellt. Der Kuppelrahmen 104 besitzt eine Nut 108, in der das Kraftübertragungsglied 109 geführt ist, das mit dem Riegelglied 130 in Verbindung steht. Betätigt wird das Kraftübertragungsglied 109 durch den Hebel 120, der schwenkbeweglich durch eine Achse 121 mit dem Kuppelrahmen 104 verbunden ist, wie sich dies im Einzelnen aus Figur 10 ergibt, Der Hebel 120 ist drehbeweglich mit einer Schubstange 122 verbunden, die mit einem Schlitten 123 in Verbindung steht, durch den das Kraftübertragungsglied 109 klemmbar erfassbar ist. Durch Verschwenken des Hebels - wie aus Figur 10 erkennbar - wird das Kraftübertragungsglied 109 in Richtung des Doppelpfeils 140 verschoben.

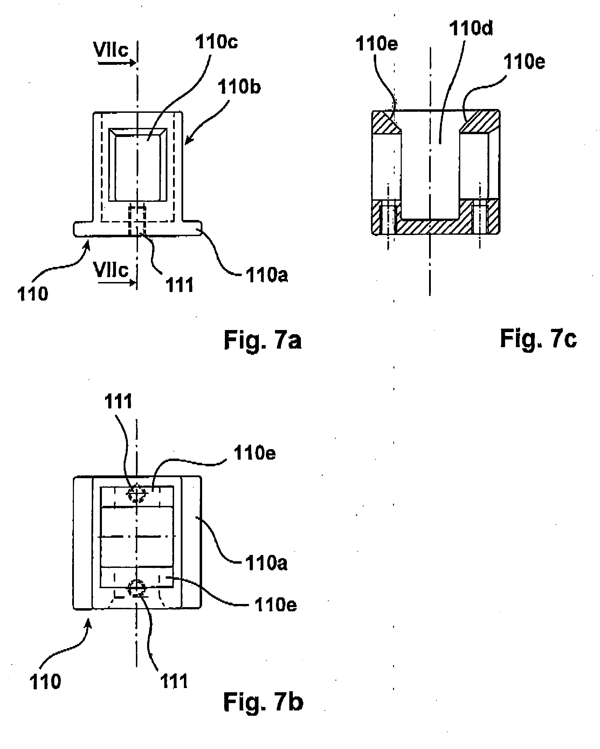

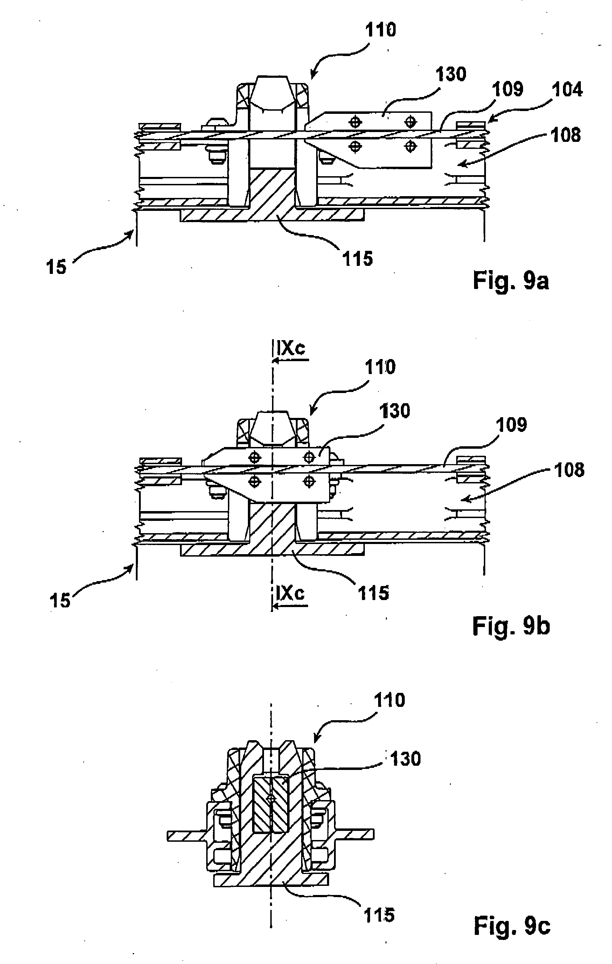

Das weibliche Kupplungsglied 110 ist in den Figuren 7a, 7b, 7c in verschiedenen Ansichten dargestellt. Das männliche Kupplungsglied 115 ergibt sich in seiner Ausbildung aus den Figuren 6a und 6b. Erkennbar weist das weibliche Kupplungsglied 110 eine T-förmige Gestalt auf, wobei der Steg 110a Bohrungen 111 zur Aufnahme von nicht dargestellten Schrauben aufweist, mit welchen das jeweilige weibliche Kupplungsglied 110 an dem Kuppelrahmen 104 fixierbar ist. Das weibliche Kupplungsglied ist in entsprechenden Aussparungen in der Nut des Kupplungsrahmens angeordnet; in jedem Fall liegt das männliche Kuppelungsglied 115 in dem weiblichen Kupplungsglied 110 derart ein, dass das in der Nut befindliche Riegelglied 130 die Verriegelung vornehmen :kann. Hierbei besitzt der Schenkel 110b des Kupplungsgliedes 110 eine Öffnung 110c zur Aufnahme des Riegelgliedes 130 gemäß den Figuren 9a, 9b.

Korrespondierend hierzu weist der Schenkel 115b des ebenfalls T-förmigen männlichen Kupplungsgliedes in Form des Riegelbolzens darüber hinaus ebenfalls eine Öffnung 115c auf, die gleichfalls der Aufnahme des Riegelgliedes 130 gemäß den Figuren 9a, 9b dient. Die Ausbildung und Anordnung der Öffnungen 110c und 115c ist derart, dass diese miteinander fluchten, so dass das Riegelglied 130 in diese beiden Öffnungen einlaufen kann, wenn sich das männliche Kupplungsglied 115 in dem weiblichen Kupplungsglied 110 befindet (Fig. 9a bis 9c). Das mit 115 bezeichnete männliche Kupplungsglied gemäß den Figuren 6a, 6b besitzt ebenfalls einen Steg 115a zur Fixierung an dem Kuppelrahmen 104, 105 mittels Schrauben durch die Schraublöcher 116.

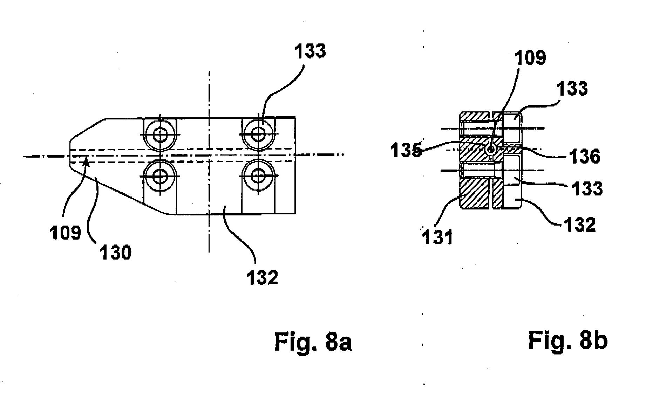

Das Riegelglied 130 umfasst zwei Platten 131, 132, die durch Schrauben 133 miteinander verbunden sind (Fig. 8a, Fig. 8b). Auf ihren einander zugewandten Seiten weisen die Platten 131, 132 jeweils eine halbkreisförmige Nut 135, 136 auf, die der Aufnahme des Kraftübertragungsgliedes 109 dient, wobei das Kraftübertragungsglied 109 als biegsame Stange durch die beiden Platten im Bereich der Nut 135, 136 klemmend erfasst wird.

Das weibliche Kupplungsglied 110 weist im Bereich des Einlaufs 110d vier Öffnungen 110c sowie die beiden Einlaufschrägen 110e auf, um dem männlichen Kupplungsglied mit seinen ebenfalls korrespondierend hierzu angeordneten eine Spitze bildenden Einlaufschrägen 115e das Einlaufen bei der Zentrierung zu erleichtern.

Der Vorgang des Verriegelns ergibt sich nunmehr im Einzelnen aus den Figuren 9a, 9b. Figur 9a zeigt eine Stellung, bei der sich das männliche Kupplungsglied 115 bereits in dem weiblichen Kupplungsglied 110 befindet, kurz bevor das Riegelglied 130 die beiden Kupplungsglieder in deren Öffnungen 110c, 115c verriegelt, wie sich dies im Einzelnen aus Figur 9b ergibt. Figur 9c zeigt einen Schnitt gemäß der Linie IX - XI aus Figur 9b, wobei hier im Einzelnen erkennbar ist, wie durch das Riegelglied 130 die Verriegelung sowohl des männlichen als auch des weiblichen Kupplungsgliedes erfolgt.

Figur 3 zeigt eine lenkbare Achse 2aa der Tandemachse 2a des Hinterwagens 2. Hierzu weist die Spurstange 2c einen insbesondere elektrisch betriebenen Antrieb 2d auf, der die Spurstange entsprechend dem Lenkwinkel der vorderen lenkbaren Achse des Vorderwagens einstellt.

## Patentansprüche

1. Als Zugfahrzeug ausgebildeter Bus (1) mit einem Personentransportanhänger, wobei der Anhänger (2) durch ein Gelenk (20) mit dem Zugfahrzeug in Verbindung steht, wobei das Gelenk (20) durch eine Kupplungseinrichtung (60) mit dem Zugfahrzeug (1) lösbar verbindbar ist, wobei das Zugfahrzeug (1) mit dem Anhänger (2) verbindend ein Übergang, umfassend einen Balg (11) und eine Übergangsplattform (50) ist, wobei sowohl der Balg (11) als auch die Plattform (50) lösbar an dem Zugfahrzeug (1) angeordnet sind, wobei der Anhänger (2) eine Tandemachse (2a) aufweist.

2. Als Zugfahrzeug ausgebildeter Bus mit einem Personentransportanhänger nach Anspruch1,
**dadurch gekennzeichnet,**
**dass** die hintere Achse (2aa) der Tandemachse (2a) lenkbar ist.

3. Als Zugfahrzeug ausgebildeter Bus mit einem Personentransportanhänger nach Anspruch 1,
**dadurch gekennzeichnet,**
**dass** die Knickachse (20a) des Drehgelenks (20) beabstandet ist von der Nick- und Wankachse (45, 45a) des mindestens einen Lagerelements (40), das am Wagenkasten befestigt ist.

4. Als Zugfahrzeug ausgebildeter Bus mit einem Personentransportanhänger nach Anspruch 3,
**dadurch gekennzeichnet,**
**dass** zur Übertragung von Nick- und Wankbewegungen Metallgummilager als Lagerelemente (40) vorgesehen sind.

5. Als Zugfahrzeug ausgebildeter Bus mit einem Personentransportanhänger nach Anspruch 3,
**dadurch gekennzeichnet,**
**dass** das mindestens eine Lagerelement (40) einen horizontal quer zur Fahrzeuglängsachse verlaufenden Bolzen (40c) aufweist.

6. Als Zugfahrzeug ausgebildeter Bus mit einem Personentransportanhänger nach Anspruch 1,
**dadurch gekennzeichnet,**
**dass** die Kupplung der Fahrzeuge (1, 2) miteinander im Bereich der Metallgummilager (40) zur Übertragung der Nick- und Wankbewegungen erfolgt.

7. Als Zugfahrzeug ausgebildeter Bus mit einem Personentransportanhänger nach Anspruch 1,
**dadurch gekennzeichnet,**
**dass** zur lösbaren Verbindung des Balges(11) mit dem Fahrzeug (1) eine Kupplungsvorrichtung, umfassend zwei Kuppelelemente (104, 105) vorgesehen ist, wobei die Kuppelelemente (104, 105) miteinander in Eingriff bringbare männliche und weibliche Kupplungsglieder (110, 115) aufweisen, wobei zur Verriegelung der männlichen Kupplungsglieder (115) in den weiblichen Kupplungsgliedern (110) jeweils ein Riegelglied (130) vorgesehen ist, wobei das Riegelglied (130) durch die jeweiligen Kuppelrahmen (104, 105) verschieblich geführt ist, wobei das Riegelglied (130) mit einem Kraftübertragungsglied (109) in Verbindung steht, das in dem jeweiligen Kuppelelement (104, 105) verschieblich geführt ist, wobei das Kraftübertragungsgiled (109) sowohl Zug- als auch Schubkräfte überträgt.

8. Als Zugfahrzeug ausgebildeter Bus mit einem Personentransportanhänger nach Anspruch 7,
**dadurch gekennzeichnet,**
**dass** die Kuppelelemente Kuppelrahmen (104, 105) sind.

9. Als Zugfahrzeug ausgebildeter Bus mit einem Personentransportanhänger nach Anspruch 7,
**dadurch gekennzeichnet,**
**dass** das Kuppelelement als Rahmen (104, 105) durch die Stirnwand des Fahrzeugs gebildet ist.

10. Als Zugfahrzeug ausgebildeter Bus mit einem Personentransportanhänger nach Anspruch 7 oder 8,
**dadurch gekennzeichnet,**
**dass** das Kuppelelement (104, 105) eine Nut (108) zur Aufnahme des Kraftübertragungsgliedes (109) und des Riegelgliedes (130) aufweist, wobei das weibliche Kupplungsglied (110) im Bereich der Nut (108) derart angeordnet ist, dass das Riegelglied (130) zur Verriegelung des männlichen Kupplungsgliedes (115) in dem weiblichen Kupplungsglied (110) in das weibliche Kupplungsglied (110) einführbar ist.

11. Als Zugfahrzeug ausgebildeter Bus mit einem Personentransportanhänger nach Anspruch 7,
**dadurch gekennzeichnet,**
**dass** das Kraftübertragungsglied (109) in Richtung seiner Längsachse beweglich in der Nut (108) angeordnet ist.

12. Als Zugfahrzeug ausgebildeter Bus mit einem Personentransportanhänger nach einem der voranstehenden Ansprüche 7 bis 11,
**dadurch gekennzeichnet,**
**dass** das weibliche Kupplungsglied (110) eine Einlaufschräge (110e) für das männliche Kupplungsglied (115) aufweist.

13. Als Zugfahrzeug ausgebildeter Bus mit einem Personentransportanhänger nach einem der voranstehendert Ansprüche 7 bis 12,
**dadurch gekennzeichnet,**
**dass** das männliche Kupplungsglied (115) einen Riegelbolzen (115b) zur Aufnahme durch das weibliche Kupplungsglied (110) aufweist, wobei der Riegelbolzen (115b) im Bereich seines freien Endes eine konisch zulaufende Spitze (Pfeil 115e) aufweist.

14. Als Zugfahrzeug ausgebildeter Bus mit einem Personentransportanhänger nach Anspruch 13,
**dadurch gekennzeichnet,**
**dass** der Riegelbolzen (115b) eine Öffnung (115c) zur Aufnahme des Riegelgliedes (130) aufweist.

15. Als Zugfahrzeug ausgebildeter Bus mit einem Personentransportanhänger nach einem der voranstehenden Ansprüche 7 bis 14,
**dadurch gekennzeichnet,**
**dass** das Kraftübertragungsglied (109) durch einen am Kuppelelement (104, 105) angeordneten Hebel (120) betätigbar ist.
